# EUROPÄISCHE PATENTSCHRIFT

(11) **EP 3 043 945 B1**
(45) Veröffentlichungstag und Bekanntmachung des Hinweises auf die Patenterteilung: **29.09.2021**
(21) Anmeldenummer: 14752800.4
(22) Anmeldetag: 04.08.2014
(51) Int. Cl.: B23F 5/16

(54) **WÄLZSCHÄLVERFAHREN UND ZUGEHÖRIGE VORRICHTUNG**
SKIVING METHOD AND CORRESPONDING DEVICE
PROCÉDÉ DE DÉCOLLETAGE EN DÉVELOPPANTE, ET DISPOSITIF CORRESPONDANT

(30) Priorität: 11.09.2013 DE 102013109981
(43) Veröffentlichungstag der Anmeldung: 20.07.2016
(73) Patentinhaber: Profilator GmbH & Co. KG, 42329 Wuppertal (DE)
(72) Erfinder: PROCK, Erich, 88213 Ravensburg (DE); SOBCZYK, Marcel, 42653 Solingen (DE)
(74) Vertreter: Grundmann, Dirk
(86) Internationale Anmeldenummer: PCT/EP2014/066730
(87) Internationale Veröffentlichungsnummer: WO 2015/036172

(56) Entgegenhaltungen:
- EP-A1- 2 474 379
- EP-A1- 2 570 217
- WO-A1-2012/098002
- DE-A1- 3 915 976
- DE-A1-102012 012 617
- DR.-ING. CLAUS KOBIALKA: "Contemporary Gear Pre-Machining Solutions", GEAR SOLUTIONS, 1 April 2013 (2013-04-01), pages 43-49, XP055374271,

## Beschreibung

Die Erfindung betrifft ein Verfahren zum Verzahnen von Werkrädern durch Wälzschälen gemäß dem Oberbegriff des Anspruchs 1, wie z.B. aus der DE 10 2012 012617 A1 bekannt.

Die Erfindung betrifft darüber hinaus eine Vorrichtung zur Durchführung des Verfahrens.

Ein Verfahren bzw. eine Vorrichtung zur Durchführung des Verfahrens beschreibt die DE 10 2008 037 514 A1. Die bekannte Vorrichtung besitzt Spindelantriebe und Positionierantriebe, die von einer elektronischen Steuerung angetrieben werden. Dort werden nicht nur die Positionierantriebe sondern auch die Spindelantriebe von Elektromotoren ausgebildet. Beim Verzahnen von Werkstücken durch Wälzschälen wird ein Werkzeug in Form eines Schälrades kontinuierlich drehangetrieben. Das Werkstück, bei dem es sich um einen unverzahnten oder vorverzahnten Rohling handeln kann, wird von einer Werkstückspindel in einem vorgegebenen Drehzahlverhältnis derart angetrieben, dass die Schälzähne des Werkzeuges in einem wälzenden Eingriff in die zu verzahnende Verzahnung treten. Die Schälzähne greifen dabei zufolge des Achskreuzwinkels schälend in das Werkstück ein. Der Vorschub erfolgt dabei im Wesentlichen in Achsrichtung des Werkstückes. Bei einer Schrägverzahnung ist dieser Vorschubrichtung noch eine Vorschubrichtung in Umfangsrichtung überlagert, was gleichbedeutend ist, dass sich die Phasenlage von Werkstückspindel und Werkzeugspindel kontinuierlich ändert, sodass bspw. eine zur Achse schräg verlaufende Verzahnung entsteht. Bei dem bekannten Wälzschälverfahren wird die Verzahnung in mehreren aufeinanderfolgenden Wälzschälschritten gefertigt, wobei der Vorschub im Wesentlichen gleich bleibt jedoch zwischen den einzelnen Bearbeitungsschritten im Wege einer Zustellung der Achsabstand derart verändert wird, dass schrittweise die Zahnzwischenräume zwischen den zu fertigenden Zähnen vertieft werden. Bei dem gattungsgemäßen Verfahren sind bei einem Schnitt zeitweise sowohl der den Grund des Zahnzwischenraumes fräsende Abschnitt des Schneidzahnes als auch die beiden die Zahnflanken des Zahnzwischenraumes schneidenden Abschnitte im Eingriff. Dies hat zur Folge, dass sich die effektive Schneidkantenlänge, also die Länge der Bereiche der Schneidkante, die gleichzeitig in einem Schnitteingriff stehen, vergrößert bzw. verkleinert. Während der Durchwälz-Bewegung des Schneidzahnes durch die Zahnlücke vergrößert bzw. verkleinert sich relativ schlagartig die effektive Schneidkantenlänge. Bei hohen Eingriffstiefen, also bei der Verzahnung von großen Zahnmodulen oder Laufverzahnungen, kommt es zu Vibrationen und als Folge dessen zu einer Verminderung der Bearbeitungsqualität und der Werkzeugstandzeit.

Die EP 2 570 217 A1 beschreibt ein Wälzschälverfahren und eine diesbezügliche Vorrichtung. Zum Erzeugung einer Verzahnung wird das Werkrad und das Schälrad in einem Achskreuzwinkel ihrer Drehachsen in einem vorgegebenen Drehzahlverhältnis gedreht. In mehreren aufeinanderfolgenden Schritte wird die Eingriffstiefe der Schneidzähne in die zwischen zwei sich gegenüberliegenden Zahnflanken des Werkrades liegenden Zahnzwischenräumen schrittweise oder stetig vergrößert. Danach, wenn die maximale Eingriffstiefe der Schneidzähne erreicht ist, werden in zeitlicher Aufeinanderfolge die Zahnflanken bearbeitet, in dem der Verdrehwinkel zwischen Schälrad und Werkrad, also deren Phasenlage modifiziert wird.

Auch die DE 3915 976 A1 beschreibt ein Wälzschälverfahren und eine diesbezügliche Vorrichtung. Auch hier wird zunächst bei einem vorgegebenen Drehzahlverhältnis zwischen Werkrad- und Schälraddrehung bei gleicher Phasenlage eine Rohverzahnung gefertigt. Nach erreichen der maximalen Eingriffstiefe der Schneidzähne werden die beiden Zahnflanken nachbearbeitet, wozu der Verdrehwinkel zwischen den Drehungen des Schneidrades und des Werkrades geändert wird, um bspw. eine Balligkeit der Zahnflanken zu erzeugen.

Der Erfindung liegt die Aufgabe zugrunde, das gattungsgemäße Verfahren bzw. die gattungsgemäße Vorrichtung hin zu einem besseren Fertigungsergebnis weiterzubilden.

Gelöst wird die Aufgabe durch die in den Ansprüchen angegebene Erfindung.

Bei einer schrittweisen Bearbeitung, bei der nach jedem Bearbeitungsschritt nicht nur der Achsabstand verändert wird, also sich bei der Bearbeitung von innen verzahnten Zahnrädern vergrößert und bei der Bearbeitung von außen verzahnten Zahnrädern verkleinert, wird damit einhergehend auch schrittweise bei jedem Bearbeitungsschritt ein Verdrehwinkel geändert. Mit Verdrehwinkel ist hier die Winkellage eines festen Punktes auf der Schneidkante des Schneidzahnes zu einem festen Punkt auf der Werkstückumfangsfläche gemeint. Während beim Verfahren gemäß eingangs genanntem Stand der Technik die Zahnlücke an jeder Axialposition bei jedem Schritt in Achsabstandsrichtung vertieft und dabei wegen schräg verlaufenden seitlichen Abschnitten der Schneidkante beide Zahnlückenflanken symmetrisch verbreitert werden, wird bei diesem Verfahren die Zahnlücke nicht exakt in Achsabstandsrichtung vertieft. Die Verbreiterung der Zahnlücke ist bei einzelnen aufeinanderfolgenden Schritten auch nicht symmetrisch. Bei einem Schneidzahn, dessen Schneidkante eine Schneidkantenkontur aufweist, die der Fertigkontur des Zahnzwischenraumes entspricht, kann beim letzten Bearbeitungsschritt, dem Schlichtschritt der Verdrehwinkel Null sein. Eine derartige Bearbeitung beginnt bevorzugt mit einem großen Verdrehwinkel, der im Zuge der Vertiefung des Zahnzwischenraumes schrittweise verkleinert wird, wobei bevorzugt der Absolutbetrag des Verdrehwinkels beim ersten Bearbeitungsschritt maximal ist und im Zuge der weiteren Bearbeitungsschritte schrittweise verkleinert wird, bis er im letzten Schritt Null oder nahezu Null beträgt. Ist die Schneidkantenkontur der Schneidkante anders, nämlich kleiner, als die Fertigkontur des Zahnzwischenraumes, so erfolgt die Bearbeitung mit einer schrittweisen Veränderung des Verdrehwinkels ebenfalls beginnend mit einem maximalen Verdrehwinkel. Im Zuge der weiteren Bearbeitung wird der Verdrehwinkel auch schrittweise verkleinert, bis er im letzten Schritt seinen Minimalwert einnimmt. Bei dieser Art der Bearbeitung wird das Verzahnverfahren mit zwei Schlichtschritten beendet, die mit einem positiven und einem negativen minimalen Verdrehwinkel durchgeführt werden.

Eine deutliche Beeinflussung der effektiven Schneidkantenlänge wird dadurch erreicht, dass zwischen den Bearbeitungsschritten der Achsabstand von Werkzeugspindel und Werkstückspindel und ein Verdrehwinkel eines festen Punktes bspw. der Mitte des zwischen einer ersten und einer zweiten Zahnflanke gelegenen Zahnzwischenraums zu einem festen Punkt auf dem Schneidzahn bspw. dessen Mitte derart verändert wird, dass ein erster Schneidkantenabschnitt des Schneidzahnes gegenüber anderen Schneidkantenabschnitten dieses Schneidzahnes mit einem zumindest verminderten Spanabtrag an einen bei einem vorhergehenden Bearbeitungsschritt gefertigten Zahnflankenabschnitt der ersten Zahnflanke angreift. Dieser Spanabtrag kann auch Null sein. Nach einer Gruppe von Bearbeitungsschritten, bevorzugt nach jedem Bearbeitungsschritt wird der Verdrehwinkel derart geändert, dass ein zweiter Schneidkantenabschnitt, der vom ersten Schneidkantenabschnitt verschieden ist, an einem Zahnflankenabschnitt der zweiten Zahnflanke gegenüber anderen Schneidkantenabschnitten dieses Schneidzahnes mit einem zumindest verminderten Spanabtrag angreift. Auch hier kann dieser Spanabtrag Null oder fast Null sein. Eine bevorzugte Variante des Verfahrens sieht somit vor, dass nach ein oder mehreren Bearbeitungsschritten das Vorzeichen des Verdrehwinkels gewechselt wird. Wird das Vorzeichen (plus/minus) nach jedem Schritt gewechselt, so ist eine symmetrische Bearbeitung der Zahnlückenflanken möglich, aber nicht bei jedem Einzelschritt, sondern jeweils mit einem Doppelschritt. Die effektive Schneidkantenlänge verändert sich mit dem erfindungsgemäß weitergebildeten Verfahren während der Durchwälz-Bewegung des Schneidzahnes durch die Zahnlücke (zeitlich) wesentlich geringer, als es beim Stand der Technik der Fall ist. Beobachtungen und insbesondere Berechnungen ergaben nämlich, dass mit dem Verfahren gemäß Stand der Technik die zeitliche Änderung der Länge der effektiven Schneidkantenlänge mit zunehmender Schnitttiefe steil ansteigt und auch wieder steil abfällt. Der Wechsel von effektiven Schneidkantenlänge wird als Ursache für die beobachteten Vibrationen angesehen. Die beim Stand der Technik dadurch auftretende Stoßbewegung wird durch das erfindungsgemäße Verfahren drastisch vermindert. Die bevorzugte Variante des Verfahrens sieht vor, dass bei der Zustellung in Drehrichtung zwar der Absolutbetrag des Verdrehwinkels schrittweise vergrößert oder verkleinert wird, sich das Vorzeichen des Verdrehwinkels nach einer Gruppe von Bearbeitungsschritten, insbesondere nach jedem Bearbeitungsschritt aber ändern soll. Mit dieser Verfahrensführung wird zunächst für einige Bearbeitungsschritte bspw. eine linke Zahnflanke und dann für eine weitere Gruppe von Bearbeitungsschritten eine rechte Zahnflanke bearbeitet. In einer bevorzugten Ausgestaltung des Verfahrens wechselt das Vorzeichen des Verdrehwinkels nach jedem Bearbeitungsschritt. Es folgt dann eine pendelartige Zustellung in Werkstückumfangsrichtung derart, dass mit jedem Bearbeitungsschritt die zu bearbeitende Zahnflanke wechselt. Eine Vertiefung des Zahnzwischenraumes also eine Zustellung in Achsabstandsrichtung kann bei jedem Bearbeitungsschritt stattfinden. Bei der pendelartigen Zustellung ist dies aber nicht zwingend notwendig. Eine Linksflankenbearbeitung und eine Rechtsflankenbearbeitung können unmittelbar nacheinander erfolgen, ohne dass sich der Achsabstand ändert. Die Bearbeitung beginnt vorzugsweise mit einem relativ großen Verdrehwinkel, bei dem im ersten Bearbeitungsschritt zunächst ein kopfseitiger Abschnitt an der zu verzahnenden Flanke freigeschnitten wird. In dem darauffolgenden Bearbeitungsschritt wird ein kopfseitiger Abschnitt der gegenüberliegenden Zahnflanke bearbeitet. Dies kann mit einer radialen Zustellung oder ohne radiale Zustellung erfolgen. Eine weitere mögliche Variante sieht zunächst einige grade Schruppschnitte vor, bei denen die Zustellung lediglich in Radialrichtung erfolgt. Erst dann erfolgt die pendelartige Zustellung. Bei beiden Bearbeitungsschritten wird als Folge der radialen Zustellung auch der Zahnzwischenraum vertieft. Dies hat zur Folge, dass beim alternierenden Zustellen jeweils nur eine der beiden Zahnflanken bearbeitet wird. Die erste und die zweite Zahnflanke werden bevorzugt abwechselnd bearbeitet. Dabei erfolgt der Spanabhub entlang dieser Zahnflanke jeweils nur auf der Länge, die der Zustellungsstrecke in Achsabstandsrichtung entspricht. Bei der pendelartigen Bearbeitung greifen beide seitlichen Zahnflanken des Schneidzahnes gegenüber dem Stand der Technik mit verkürzter effektiver Schneidkantenlänge am Werkstück an. Bevorzugt wird mit dem erfindungsgemäßen Verfahren der Zahnzwischenraum lediglich schrittweise vertieft und nur unwesentlich schrittweise verbreitert, da der Absolutbetrag des Verdrehwinkels hin zu höheren Schrittzahlen bis auf Null oder nahezu Null vermindert wird. Beim letzten Bearbeitungsschritt handelt es sich um einen Schlichtschritt. Dieser kann mit einem Verdrehwinkel Null durchgeführt werden, sodass hier beide Zahnflanken gleichzeitig bearbeitet werden. Es ist aber auch möglich, die Bearbeitung mit zwei Schlichtschritten zu beenden, die mit einem minimalen relativen Verdrehwinkel durchgeführt werden. Bei dieser Bearbeitung kann im Wege einer Korrektur der jeweiligen Zahnflanke noch eine Feinkontur auferlegt werden, indem z. B. während des Schlichtschritts kontinuierlich der Achsabstand geringfügig geändert wird, sodass bspw. einer leicht konisch oder ballig gefertigten Zahnflanke oder einer Kombination aus beiden eine grade verlaufende Zahnflanke gegenüberliegt. Eine derartige Bearbeitung erfolgt als Vorhaltung gegen Verzug bei einer Wärmebehandlung oder als Verbesserung zu tragbildbildende-Eigenschaften für die spätere Funktion der Verzahnung. Dieser Schlichtschritt kann mit einem stark reduzierten Vorschub erfolgen oder aber auch mit einer reduzierten Zustellung, sodass das Zerspanvolumen pro Zeit vermindert ist. Während bei den dem Schlichtschritt vorangehenden Schruppschritten mit einer kurzen effektiven Schneidkantenlänge gearbeitet wird, kann beim Schlichtschritt mit einer langen effektiven Schneidkantenlänge gearbeitet werden. Bei den Schruppschritten kann die Zahnflanke schrittweise im Wesentlichen nur im Bereich des aktuellen Grundes der Zahnlücke bearbeitet werden. Beim Schlichtschritt wird die Zahnflanke bevorzugt als Ganzes bearbeitet/korrigiert.

Es wird als vorteilhaft angesehen, dass mit dem modifizierten Verfahren die Anzahl der aufeinanderfolgenden Bearbeitungsschritte deutlich gegenüber dem Stand der Technik erhöht werden kann, ohne dass es zu störenden Vibrationen kommt. Anders als beim Stand der Technik müssen keine maschinengestellversteifenden Maßnahmen ergriffen werden, um die Vibrationen zu beherrschen. Wegen der erhöhten Anzahl der Schnitte ist es möglich, die Schnittgeschwindigkeit zu erhöhen. Insgesamt ist die effektive Schneidkantenlänge während der gesamten Bearbeitung vermindert. Beim Durchgang des Schneidzahnes durch die Zahnlücke ändert sich die effektive Schneidkantenlänge deutlich weniger als beim Stand der Technik. Dies führt zu einer Standzeitverlängerung des Werkzeugs und zu einer Qualitätsverbesserung der gefertigten Verzahnung. Verzahnungen mit einem großen Zahnmodul sind fertigbar. Es sind tiefere Einschnitte und breitere Zahnlücken fertigbar.

In einer Weiterbildung des Verfahrens ist vorgesehen, dass zumindest nach einem die Zahnlücke vertiefenden Bearbeitungsschritt ein Bearbeitungsschritt durchgeführt wird, bei dem lediglich zumindest eine Zahnflanke, nicht aber der Zahngrund bearbeitet wird. Dies kann dadurch realisiert werden, dass beim Fertigen einer Außenverzahnung der Achsabstand zunächst bei zumindest einem Bearbeitungsschritt vermindert wird, so dass eine Zahnlückenvertiefung stattfindet, dann aber bei zumindest einem folgenden Bearbeitungsschritt der Achsabstand wieder geringfügig vergrößert wird, so dass die Schneidzähne nicht in den Zahnlückengrund eingreifen, sondern als Folge einer Änderung des Verdrehwinkels lediglich eine der beiden Zahnflanken bearbeiten. Diese Variante ist insbesondere bei einem Schlichtschritt vorgesehen. Der Zahngrund wird mit dem letzten Schruppschritt festgelegt. In dem danach folgenden Schlichtschritt wird lediglich die Zahnflanke bearbeitet, nicht jedoch der Zahngrund. Es sind insbesondere zwei aufeinanderfolgende Schlichtschritte vorgesehen, bei denen erst die eine und dann die andere, gegenüberliegende Zahnflanke der Zahnlücke bearbeitet wird. Als Folge des vergrößerten Achsabstandes bei den beiden Schlichtschritten bleibt die Lage des Zahngrundes erhalten. Bei einer Innenverzahnung wird der Achsabstand zunächst bei den Schruppschritten schrittweise vergrößert. Bei den Schlichtschritten wird der Achsabstand dann zunächst geringfügig vermindert.

In einer weiteren Variante wird vorgeschlagen, dass der Verdrehwinkel von Bearbeitungsschritt zu Bearbeitungsschritt derart geändert wird, dass die Zahnflanken eine Evolventenfläche ausbilden. Als Folge der Lage des Werkzeuges zum Werkstück bildet sich bei festgehaltenem Verdrehwinkel bei jedem Bearbeitungsschritt eine zykloidische Teilfläche aus. Durch eine geeignete Veränderung des Verdrehwinkels nach jedem Bearbeitungsschritt bildet die Summe der zykloidischen Teilflächen eine Evolventenfläche. Bei dieser Verfahrensvariante endet die Zahnflankenbearbeitung nicht mit einem Schlichtschritt. Bei jedem Bearbeitungsschritt wird die bereits fertiggestellte Zahnflanke lediglich um einen Zahnflankenabschnitt derart ergänzt, dass die Summe der Zahnflankenabschnitte in einer Evolventenfläche oder in einer anderweitig speziell definierten Kontur liegt.

In einer Weiterbildung der Erfindung ist vorgesehen, dass zumindest ein Bearbeitungsschritt mit einem sogenannten ziehenden Schnitt durchgeführt wird. Dabei ist die Spanabtragsrichtung der Vorschubrichtung entgegengesetzt. Dies erfordert größere Freiwinkel an den Schneidzähnen, so dass die Schneidzähne kollisionsfrei in die Zahnlücke eintreten können. Diese Bearbeitung erfolgt bevorzugt bei einem Schlichtschritt.

Die Erfindung betrifft darüber hinaus eine Vorrichtung zur Durchführung des Verfahrens, wie im Anspruch 9 definiert.

Das Wesen des Verfahren liegt somit darin, dass zwar wie beim Stand der Technik bekannt, die Zahnflanken in zeitlicher Aufeinanderfolge bearbeitet werden, jedoch einhergehend mit der schrittweisen Vergrößerung der Eingriffstiefe abwechselnd im Wesentlichen nur eine der beiden Zahnflanken bearbeitet wird. Der Wechsel zwischen der Bearbeitung der beiden sich gegenüberliegenden Zahnflanken erfolgt also jeweils nach einer geringfügigen Vergrößerung der Eingriffstiefe durch eine Relativverlagerung der Schneidzähne innerhalb der Zahnzwischenräume der Zähne des Werkrades. Es erfolgt somit ein pendelartiger Wechsel, der jeweils mit einem langen Schneidkantenabschnitt der Schneidzähne bearbeiteten Zahnflanken, wobei die jeweils andere Zahnflanke mit nur einem kurzen Schneidkantenabschnitt bearbeitet wird, wobei die Länge des kurzen Schneidkantenabschnittes im Wesentlichen dem Maß der vergrößerten Eingriffstiefe entspricht und der lange Schneidkantenabschnitt größer ist, als das Maß der gegenüber dem vorherigen Bearbeitungsschritt vergrößerten Eingriffstiefe, so dass insgesamt gegenüber dem Stand der Technik die effektive Schneidkantenlänge vermindert ist. Bevorzugt erfolgt nach jeder der schrittweisen Vergrößerung der Eingriffstiefe ein Wechsel der bearbeiten Zahnflanke. Dies hat zur Folge, dass bei jedem Wechsel der bearbeiteten Zahnflanke auch die Eingriffstiefe vergrößert wird. In einer bevorzugten Weiterbildung der Erfindung ist vorgesehen, dass beim letzten Wechsel der bearbeiteten Zahnflanke keine Vergrößerung der Eingriffstiefe vorgenommen wird, da die letzten beiden Bearbeitungsschritte Schlichtschritte sind.

Die Erfindung wird nachfolgend anhand beigefügter Zeichnungen erläutert. Es zeigen:
- Figur 1:: eine Darstellung gemäß Figur 2 der DE 10 2008 037 514 A1 zur Verdeutlichung der Relativlage des Schälrades zum Werkrad und der konstruktiven Elemente,
- Figur 2:: einen Schnitt durch das Werkstück zur Verdeutlichung der Bearbeitungsschritte,
- Figur 3:: stark vergrößert den Zahnzwischenraum einer Verzahnung eines Werkrades und die Relativlage der Schneidkante eines Schneidzahnes in mehreren aufeinanderfolgenden Bearbeitungsschritten zur Verdeutlichung der schrittweisen Verdrehwinkeländerung, wobei mit dem Schneidzahn jeweils die rechte Zahnflanke während des Vertiefens der Zahnlücke bearbeitet wird,
- Figur 4:: eine Darstellung gemäß Figur 3, wobei mit der Schneidkante in aufeinanderfolgenden Schnitten jeweils die linke Zahnflanke im Zuge eines schrittweisen Vertiefens des Zahnzwischenraumes bearbeitet wird,
- Figur 5:: eine Darstellung gemäß Figur 3, jedoch zur Verdeutlichung eines Verfahrens, bei dem mit der Schneidkante eines Schneidzahnes jeweils abwechselnd die rechte Zahnflanke und die linke Zahnflanke bearbeitet wird,
- Figur 6:: eine Darstellung der wesentlichen Elemente einer erfindungsgemäßen Vorrichtung,
- Figur 7:: eine Darstellung ähnlich der Figur 5, wobei bei einer pendelartigen Zustellung durch Änderung des Verdrehwinkels mit dem letzten Schruppschritt S16 der Zahngrund 8 gefertigt und in den darauffolgenden Schlichtschritten S17, S18, ausschließlich die Zahnflanken 9, 9' bearbeitet werden, und
- Figur 8: eine Darstellung ähnlich Figur 5, wobei der Verdrehwinkel derart geändert wird, dass eine in einer Evolventenfläche oder einer anderweitig speziell definierten Kontur liegende Zahnflanke 9, 9' entsteht.

Mit der nachfolgend beschriebenen Vorrichtung wird mit einem Wälzschälverfahren eine Innenverzahnung oder eine Außenverzahnung in einen Rohling eingeschnitten. Dies erfolgt mit einem Schälrad 1 entweder in eine glattwandige Innen- oder Außenoberfläche des Rohlings oder in die Zahnflanken eines bereits vorverzahnten Rohlings. Das Verfahren besteht aus einer Vielzahl nacheinander durchgeführter Schruppschritte, in denen jeweils ein Schruppschnitt erfolgt. An die Vielzahl der Schruppschritte kann sich mindestens ein Schlichtschritt anschließen, bei dem ein Schlichtschnitt durchgeführt wird. Ein Schlichtschnitt unterscheidet sich vom Schruppschnitt im Wesentlichen durch die verminderte Zustellung, also einen geringeren Spanabtrag aber auch durch eine modifizierte Vorschubgeschwindigkeit.

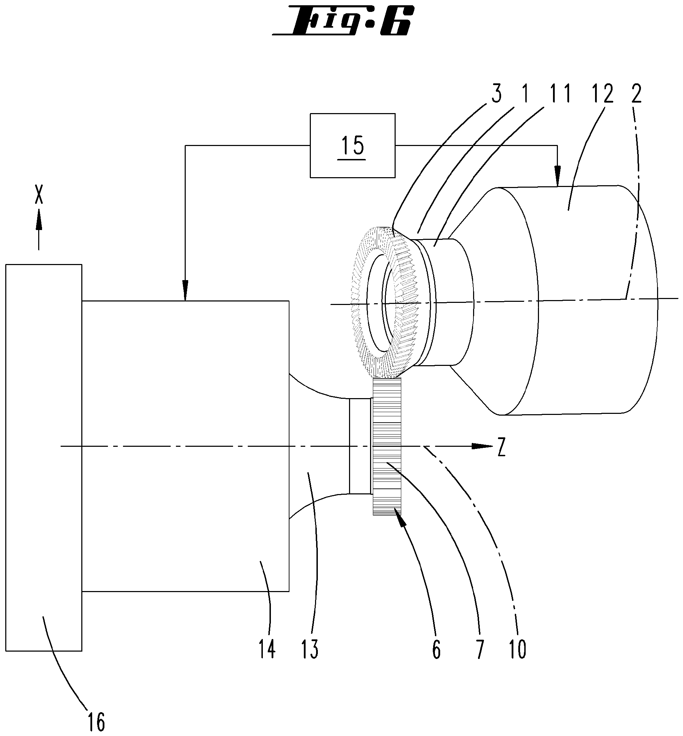

Die in der Figur 6 dargestellte Vorrichtung besitzt ein nicht dargestelltes Maschinengestell, welches eine Werkzeugspindel 11 trägt, die ein Futter besitzt, in dem ein Schneidzähne 3 aufweisendes Schälrad 1 befestigt ist. Die Werkzeugspindel 11 kann von einem elektromotorischen Antrieb 12 drehangetrieben werden. Der Antrieb 12 wird von einer Steuereinrichtung 15 gesteuert, die nach einem Bearbeitungsprogramm arbeitet. Das Schälrad 1 wird um die Werkzeugachse 2 drehangetrieben.

Am Maschinengestell sitzt eine Werkstückspindel 13. Diese ist mittels eines Positionierantriebes 16 in den beiden in der Papierebene liegenden X- und Z-Achse und in der senkrecht zur Papierebene liegenden Y-Achse verlagerbar. Mit dem Positionierantrieb 16 kann die von einem Antriebsmotor 14 drehangetriebene Werkstückspindel 13 in allen Raumrichtungen verlagert werden. Diese Verlagerung dient der Zustellung und dem Vorschub. Ein Spannfutter der Werkstückspindel 13 hält das Werkstück 6, in das eine Verzahnung 7 eingearbeitet werden soll. Bei dem in der Figur 6 dargestellten Ausführungsbeispiel wird in das Werkrad 6 eine Außenverzahnung eingearbeitet. Dabei wird das Werkstück 6 im Synchronlauf zum Schälrad 1 um die Werkstückdrehachse 10 drehangetrieben. Die Werkstückdrehachse 10 und die Werkzeugdrehachse 2 stehen in einem vorgegebenen Achskreuzwinkel a zueinander, sodass die Schneidkante 5 der Schneidzähne 3 in einen schälenden Eingriff in das Werkrad 6 treten. Durch einen Vorschub in Richtung der Werkstückdrehachse 10 kann das Werkrad 6 über seine gesamte Länge verzahnt werden. Erfolgt der Vorschub ausschließlich in Achsrichtung, so wird eine Geradverzahnung erzeugt. Ist im Vorschub in Achsrichtung ein Vorschub in Umfangsrichtung in Form einer kontinuierlichen Phasenlagenänderung überlagert, so wird eine Schrägverzahnung gefertigt.

In einer alternativen Anordnung von Werkstückspindel und Werkzeugspindel einer Werkzeugmaschine kann zum Zwecke des Vorschubs aber auch die Werkzeugspindel in allen Raumrichtungen verlagerbar sein. Es reicht grundsätzlich aber aus, wenn die Werkstückspindel und die Werkzeugspindel relativ zueinander entlang der erforderlichen Achsen zu verlagern, so kann bspw. das Werkstück in X- und Z-Richtung, und das Werkzeug in Y-Richtung bewegbar sein.

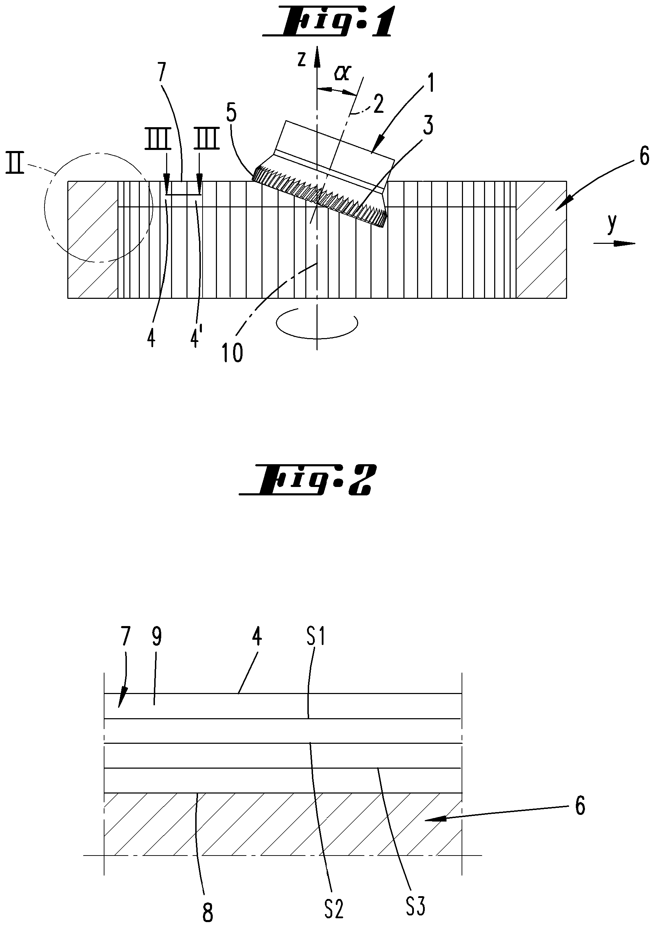

Die Figur 1 zeigt den Achskreuzwinkel a zwischen Werkzeugdrehachse 2 und Werkstückdrehachse 10. Hier wird ein hohles Werkrad 6 mit einer Innenverzahnung 7 versehen.

Aus der Figur 2 ist zu entnehmen, dass die Verzahnung dadurch gefertigt wird, dass Zahnzwischenräume 7 schrittweise vertieft werden. In einem ersten Schritt S1 erfolgt eine erste Vertiefung. Die erste Vertiefung wird in einem Bearbeitungsschritt S2 durch eine Veränderung des Achsabstandes der Achsen 2, 10 vertieft. Im Schritt S3 wird der Zahnzwischenraum 7 durch eine weitere Veränderung des Achsabstandes der Achsen 2, 10 weiter vertieft.

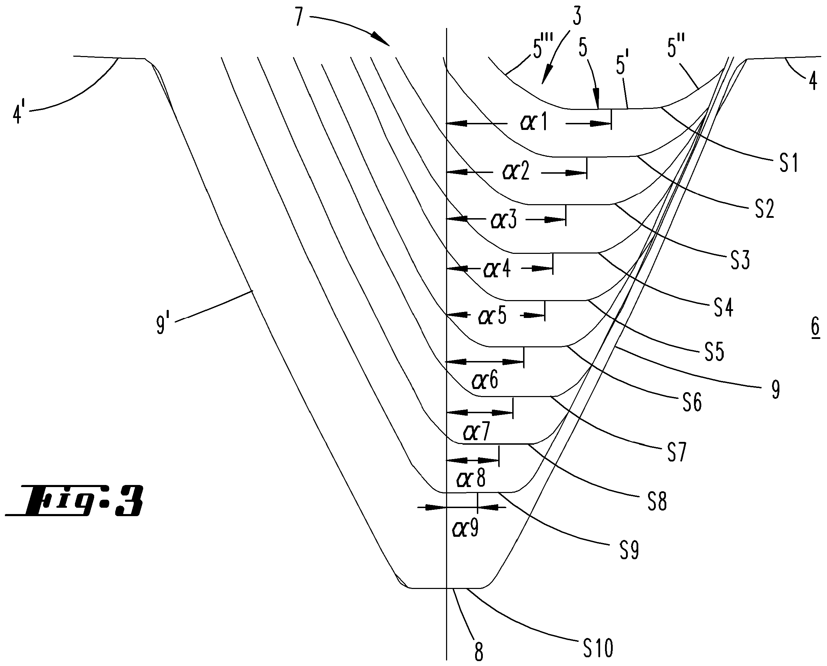

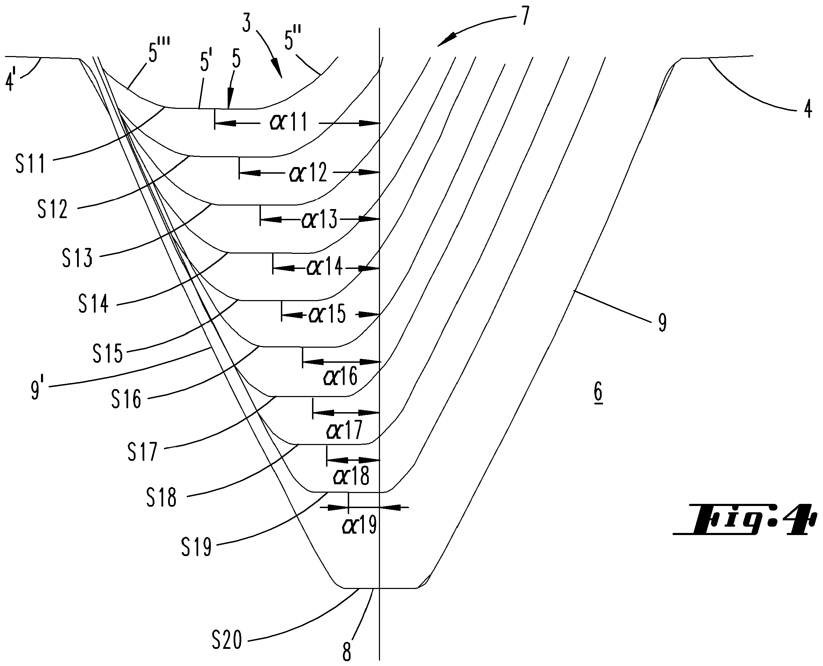

Die Figuren 3 und 4 zeigen, wie zusätzlich zu der die Vertiefung des Zahnzwischenraumes 7 bewirkenden Zustellung in Achsabstandsrichtung von Bearbeitungsschritt S1 zu Bearbeitungsschritt S20 jeweils ein Verdrehwinkel α1 bis α19 verändert wird. Der letzte Bearbeitungsschritt S20 erfolgt bei einem Verdrehwinkel Null und ist ein Schlichtschritt, der mit einer verminderten Vorschubgeschwindigkeit durchgeführt wird.

Unter Verdrehwinkel α1 bis a20 wird der Winkel einer bestimmten Position der Schneidkante 5 des Schneidzahnes 3 angesehen und dessen Versatz zu einer dazu korrespondierenden Position des fertigen Zahnzwischenraumes 7. Im Ausführungsbeispiel handelt es sich um den Versatz der Mitte des Grundes 8 des Zahnzwischenraumes 7 zur Mitte des kopfseitigen Schneidkantenabschnitts 5' der Schneidkante 5, die im letzten Bearbeitungsschritt S10 bzw. S20 beide Zahnflanken 9, 9' der Verzahnung 7 bearbeitet.

In einem ersten Bearbeitungsschritt S1 ist die Eindringtiefe des Schneidzahnes 3 minimal. Während des Durchtauchens der Schneidkante 5 durch das Werkstück 6 arbeitet der am Kopf des Schneidzahnes 3 verlaufende Schneidkantenabschnitt 5' im Wesentlichen vertiefend. Der Schneidkantenabschnitt 5" bearbeitet die rechte Zahnflanke 9 in einem geringfügigen Abstand zur Fertigkontur. Dieser geringfügige Abstand wird im letzten Bearbeitungsschritt, dem Schlichtschritt, abgetragen. Die Zahnflanke 5''' arbeitet entfernt von der Fertigkontur der linken Zahnflanke 9' ins Vollmaterial. Der Verdrehwinkel α1 besitzt bei dem ersten Bearbeitungsschritt S1 seinen größten Wert.

Ohne eine Veränderung des Vorzeichens des Verdrehwinkels a wird dann in weiteren Bearbeitungsschritten S2 bis S10 die rechte Zahnflanke bearbeitet, wobei der Verdrehwinkel α2 bis α9 schrittweise verkleinert wird. Der Verdrehwinkel α1 bis a9 kann schrittweise um einen konstanten Betrag verkleinert werden, bis zum Bearbeitungsschritt S10. Die Schneidkantenabschnitte 5" sind dabei nur im an dem kopfseitigen Abschnitt 5' angrenzenden Bereich im Eingriff.

Die Figur 4 zeigt Bearbeitungsschritte S11 bis S20, bei denen der Schneidkantenabschnitt 5''' nur in dem Bereich spanabhebend in das Werkstück eingreift, der dem Kopfabschnitt 5' der Schneidkante 5 unmittelbar benachbart ist. Der dem Schneidkantenabschnitt 5''' gegenüberliegende Schneidkantenabschnitt 5" greift hingegen auf größerer Länge in das Werkstück spanabhebend ein.

Die Erfindung betrifft insbesondere eine Kombination der in den Figuren 3 und 4 dargestellten Verfahrensschritten S1 bis S10 bzw. S11 bis 20, wobei die Verfahrensschritte dort nicht der numerischen Reihe folgend durchgeführt werden, sondern bis zum tiefsten Schnitt S10 bzw. S20 sowohl linke Zahnflanken 9' als auch rechte Zahnflanken 9 bearbeitet werden.

In einer Variante ist es bspw. möglich, einige Verfahrensschritte insbesondere die ersten Verfahrensschritte ohne eine Verdrehwinkeländerung durchzuführen, also mit einer Zustellung lediglich in radialer Richtung. Ebenso ist es möglich, nicht mit einem konstanten Vorschub zu arbeiten, sondern mit einem progressiven bzw. degressiven Vorschub zu arbeiten.

Nach einer Gruppe von Bearbeitungsschritten bspw. S1 bis S4 kann das Vorzeichen des Verdrehwinkels geändert werden, sodass nach den Bearbeitungsschritten S1 bis S4 unmittelbar die Bearbeitungsschritte S11 bis S14 durchgeführt werden. Danach kann das Vorzeichen ein weiteres Mal gewechselt werden, sodass bspw. die Bearbeitungsschritte S5 bis S7 und anschließend nach einem weiteren Vorzeichenwechsel die Bearbeitungsschritte S15 bis S17 durchgeführt werden. Schließlich können die Bearbeitungsschritte S8 und S9 und daran anschließend die Bearbeitungsschritte S18 bis S19 durchgeführt werden, an die sich dann die Schlichtschritte S10 und S20 anschließen. Auch hier wird der Absolutbetrag der Verdrehwinkel α1 bis a9 bzw. α11 bis α19 schrittweise, bevorzugt um ein konstantes Maß verkleinert. Ebenfalls schrittweise wird die Eintauchtiefe der Schneidkante 5 vergrößert. Jeweils ein Schneidkantenabschnitt 5" oder 5''' arbeitet mit einem im Wesentlichen konstanten Abstand zur Fertigungskontur der linken Flanke 9' der Verzahnung oder der rechten Flanke 9 der Verzahnung. Dieses im Abstand zur Fertigkontur liegende Abstandsvolumen wird beim Schlichtschritt mit dem Schlichtschnitt entfernt.

In einem letzten, tiefsten Schnitt S10 oder S20 können beide Flanken 9, 9' aber auch gleichzeitig bearbeitet werden. Bei diesem Schlichtschritt beträgt der Verdrehwinkel a Null. Der Mittelpunkt des Schneidkantenabschnittes 5' liegt dabei in der Mitte des Zahngrundes 8.

Durch eine Variation des Verfahrens, bei der nicht ein Schlichtschritt, sondern zwei Schlichtschritte durchgeführt werden und der Verdrehwinkel im Schlichtschritt größer als Null ist, wird in einem ersten Schlichtschritt die rechte Flanke 9 und in einem zweiten Schlichtschritt die linke Flanke 9' feinbearbeitet.

Die Schlichtschritte können auch Korrekturschnitte sein, mit denen durch eine zusätzliche Variation der Achsabstandslage eine ballige oder konische Zahnflanke erzeugt werden kann. Dies kann individuell bei der rechten Flanke 9 anders erfolgen als bei der linken Flanke 9'.

Es ist auch grundsätzlich möglich, wie es in den Figuren 3 und 4 gezeigt ist, zunächst vollständig eine rechte Zahnflanke 9 und dann anschließend eine linke Zahnflanke 9' zu bearbeiten, wobei beim Bearbeiten der rechten Zahnflanke 9 jeweils nur ein Teilabschnitt des Schneidkantenabschnittes 5" im Eingriff ist und beim Bearbeiten der linken Zahnflanken 9' jeweils nur ein Teilabschnitt der Schneidkante 5''' im Eingriff ist.

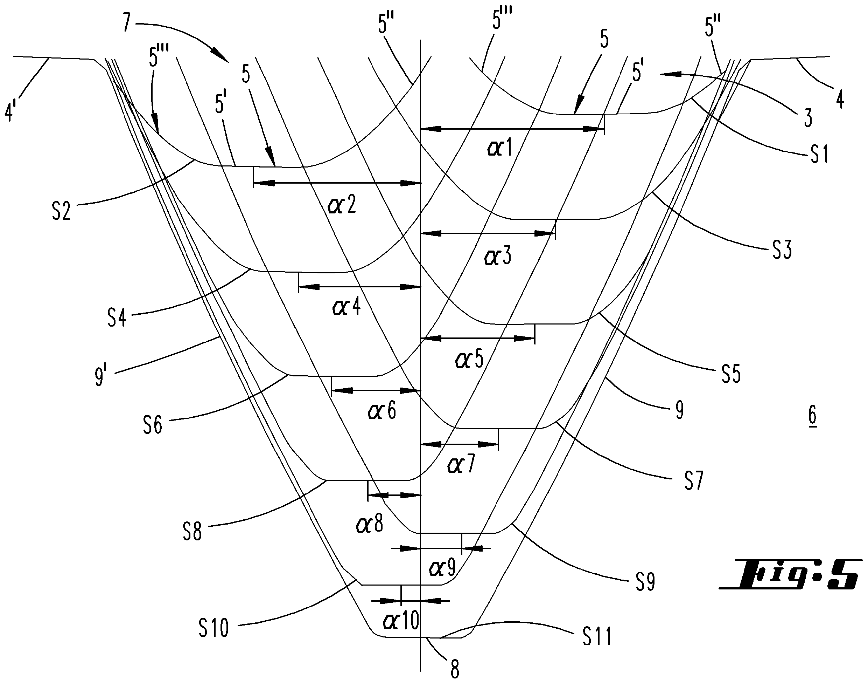

Die Figur 5 zeigt ein bevorzugtes Verfahren, bei dem in einem Schruppschritt S1 der Schneidkantenabschnitt 5" die vorläufige Fertigkontur der rechten Zahnflanke 9 bearbeitet und der Zahnflankenabschnitt 5' im Wesentlichen zahnzwischenraumvertiefend ins Werkstück 6 eintaucht. Dieser Schritt S1 erfolgt bei einem maximalen Verdrehwinkel α1 in Richtung der rechten Flanke 9. In dem darauffolgenden zweiten Schruppschritt S2 wird die linke Zahnflanke 9' der vorläufigen Fertigungskontur mit dem Schneidkantenabschnitt 5''' der Schneidkante 5 bearbeitet. Der Verdrehwinkel a2 weist jetzt zur linken Flanke 9', weist also ein anderes Vorzeichen auf. Der Absolutbetrag des Verdrehwinkels a2 ist kleiner als der Absolutbetrag des Verdrehwinkels α1. Auch die Zahneingriffstiefe ist beim Bearbeitungsschritt S2 größer als beim Bearbeitungsschritt S1.

In einer Alternative sind die Zahneingriffstiefen in den Bearbeitungsschritten S1 und S2 gleich und stimmen die Absolutwerte des jeweiligen Winkelversatzes α1 und α2 überein und unterscheiden sich lediglich hinsichtlich ihres Vorzeichens.

In einer Abfolge alternierender weiterer Schruppschritte S3 bis S11 werden abwechselnd auf der rechten Seite der Mitte des Zahnzwischenraumes 7 (S3, S5, S7, S9, S11) und auf der linken Seite der Mitte des Zahnzwischenraumes 7 (S2, S4, S6, S8, S10) Schruppschritte durchgeführt, wobei jeweils der Absolutbetrag der Verdrehwinkel α1 bis α10 schrittweise vermindert wird und jeweils auch die Eintauchtiefe der Schneidkante 5 in den Zahnzwischenraum 7 vergrößert wird. Dabei bearbeiten die Schneidkantenabschnitt 5" bei den Bearbeitungsschritten S1, S3, S5, S7, S9, S11 jeweils die rechte Zahnflanke 9 und die Schneidkantenabschnitte 5''' in den Bearbeitungsschritten S2, S4, S6, S8, S10 die linke Zahnflanke 9'. Mit dem zwischen den Schneidkantenabschnitten 5" und 5''' angeordneten Schneidkantenabschnitt 5' wird die Zahnlücke 7 schrittweise vertieft.

Auch hier ist in einer Variante vorgesehen, dass die Zustellung in Achsabstandsrichtung, also die Eintauchtiefe der Schneidkante 5 in die Zahnlücke 7 erst nach jedem zweiten Bearbeitungsschritt S1, S2; S3, S4; S5, S6; S7, S8 und S9, S10 geändert wird. Die Zustellung über den Verdrehwinkel erfolgt dabei durch ledigliches Wechseln des Vorzeichens des Verdrehwinkels aber gleichbleibendem Absolutbetrag.

Nach der Abfolge dieser Schruppschritte S1 bis S10 hat die Zahnlücke ihre vorläufige Fertigkontur erreicht. Mit S11 ist ein Schlichtschritt bezeichnet, bei dem in einem Schlichtschnitt die endgültige Fertigkontur beider Flanken 9, 9' bearbeitet wird. Auch hier ist eine Korrektur durch einen überlagerten Vorschub in Achsabstandsrichtung möglich.

In einer Variante ist vorgesehen, dass zwei Schlichtschritte durchgeführt werden, ein Schlichtschritt wird dabei mit einem minimal positiven Verdrehwinkel und ein zweiter Schlichtschritt mit einem minimal negativen Verdrehwinkel durchgeführt.

Die Schruppschritte können jeweils mit konstant gehaltenem Verdrehwinkel und konstant gehaltenem Achsabstand durchgeführt werden. Von Schruppschritt zu Schruppschritt ändert sich jedoch bevorzugt der Achsabstand und auch der Verdrehwinkel. Beim Schlichtschritt kann sich der Achsabstand während des Schnitts ändern.

In einer Variante des Verfahrens wird nicht bei allen Bearbeitungsschritten der Grund 8 des Zahnzwischenraumes 7 vertieft. Bezogen auf die Figuren 3/4 bzw. 5 wird bei dieser Variante nach einem der Bearbeitungsschritte S1 bis S9, S11 bis S19 oder S1 bis S19 der Achsabstand von Werkzeugspindel und Werkstückspindel derart geändert, dass der Schneidzahn 3 des Schälrades 1 nicht in den Zahngrund 8 eintaucht und dadurch den Zahngrund 8 vertieft, sondern dass lediglich die Zahnflanken 9, 9' des Zahnzwischenraumes 7 bearbeitet werden. In einer bevorzugten Variante des Verfahrens ist dieser, den Zahngrund 8 nicht bearbeitender Bearbeitungsschritt ein Schlichtschritt S10, S20, S11, in dem ein Schlichtschnitt durchgeführt wird, der lediglich einen Span von einer der Flanken 9, 9' abhebt. Bevorzugt werden zwei Schlichtschritte durchgeführt, die mit dem jeweiligen Schlichtschnitt nur eine der beiden Flanken 9, 9' bearbeiten.

Der Schlichtschnitt der in einem der zuvor beschriebenen Schlichtschritte S10, S20, S11 durchgeführt wird, kann ein sogenannter ziehender Schnitt sein, bei dem die Vorschubrichtung der Schälrichtung der Schneidzähne 3 entgegengesetzt ist. Die Schneidkanten 5 des Schneidzahnes 3 treten bei dieser Verfahrensvariante in einen vergrößerten Eintrittswinkel in das Werkrad ein und tauchen in einem verminderten Austrittswinkel aus dem Werkrad aus.

In einer weiteren Variante des Verfahrens erfolgt die Verzahnung ohne einen die Endkontur der Zahnflanken 9, 9' festlegenden Schlichtschnitt. Der diesbezügliche Schlichtschritt oder die diesbezüglichen Schlichtschritte können weggelassen werden, wenn in den Schruppschritten mit den Schruppschnitten eine sich aus mehreren Teilflächen zusammengesetzte Zahnflanke 9, 9' ergibt, die eine Evolventenform oder eine anderweitig speziell definierte Profilform besitzt. Die Zahnflanke besteht dann in Radialrichtung aneinander angrenzende Teilflächen, die zykloidisch verlaufen. Die Teilflächen liegen aber in ihrer Summe in einer Evolventenfläche oder einer anderweitig speziell definierten Kontur.

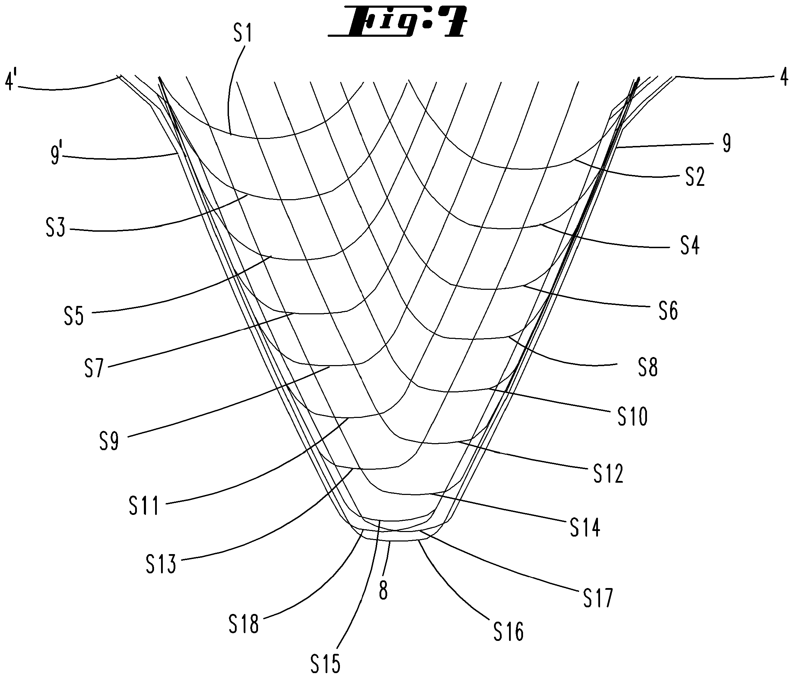

Die Figur 7 zeigt ein Verfahren, bei dem in aufeinanderfolgenden Schruppschnitten S1 bis S16 eine Grobkontur einer Verzahnung erzeugt wird. Dabei wechseln sich die linke Zahnflanke 9' erzeugende Schritte S1, S3, S5, S7, S9, S11, S13 und S15 mit jeweils die rechte Zahnflanke 9 erzeugenden Schritten S2, S4, S6, S8, S10, S12, S14 ab. Bei jedem Bearbeitungsschritt S1 bis S16 wird der aktuelle Zahngrund vertieft. Der Verdrehwinkel gegenüber einer Nulllage des Schneidzahnes wechselt bei jedem Bearbeitungsschritt S1 bis S16 sein Vorzeichen. Der Absolutwert des Verdrehwinkels vermindert sich schrittweise, bis er bei einem letzten Schruppschnitt S16 den Wert Null erreicht. Mit diesem letzten Schruppschnitt S16 wird die endgültige Lage des Zahnlückengrundes 8 festgelegt.

Im Anschluss an die Schruppschnitte S1 bis S16 werden zwei Schlichtschnitte S17 und S18 durchgeführt. Die Schlichtschnitte S17, S18 erfolgen mit verminderter Eindringtiefe des Schneidzahnes in die bereits gefertigte Zahnlücke, so dass die Schneidkante des Schneidzahnes nicht in den bereits gefertigten Zahnlückengrund 8 eingreift. Beim Schlichtschnitt S17 wird die rechte Zahnflanke 9 und beim Schlichtschnitt S18 die linke Zahnflanke 9' bearbeitet.

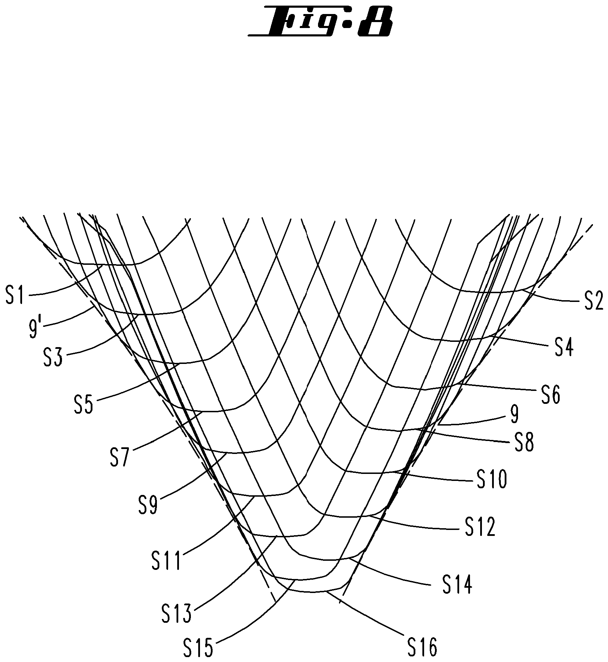

Bei dem in der Figur 8 dargestellten Ausführungsbeispiel wird kein Schlichtschnitt durchgeführt. Mit gestrichelten Linien sind dort evolventenförmige Zahnflanken 9, 9' veranschaulicht. Die Zustellung erfolgt derart, dass die Summe der mit den pendelartig durchgeführten Schnitten S1 bis S16 erzeugten Zahnflankenabschnitte eine evolvente Zahnflanke 9, 9' ergibt. Der Übersichtlichkeit wegen sind hier nicht alle Zwischenschritte dargestellt. Des Weiteren ist lediglich zur Verdeutlichung der Evolventenverlauf übertrieben abweichend vom Schneidkantenverlauf dargestellt. Möglich ist - wie zuvor beschrieben - auch eine von der Evolvente abweichende Sonderprofilform.

Es ist insbesondere vorgesehen, dass bis zum Erreichen der maximalen Eingriffstiefe der Schneidzähne (3) in die Zahnzwischenräume (7) mindestens 5, bevorzugt mindestens 10 Bearbeitungsschritte durchgeführt werden, wobei die Schneidzähne in jedem Bearbeitungsschritt eine andere Eingriffstiefe in die Zahnzwischenräume aufweisen, wobei bevorzugt ein letzter Bearbeitungsschritt vorgesehen ist, bei der Schneidzähne dieselbe Eingriffstiefe in Zahnzwischenräume haben, wie im vorletzten Bearbeitungsschritt.

### Bezugszeichenliste:

- 1: Schälrad
- 2: Werkzeugdrehachse
- 3: Schneidzahn
- 4: Zahnkopf
- 5, 5', 5", 5''': Schneidkante/Schneidkantenabschnitt
- 6: Werkstück
- 7: Innenverzahnung, Zahnzwischenraum
- 8, 8": Grund
- 9: Flanke
- 10: Werkstückdrehachse
- 11: Werkzeugspindel
- 12: Antrieb
- 13: Werkstückspindel
- 14: Antrieb
- 15: Steuereinrichtung
- 16: Positionierantrieb

- S1 - S18: Bearbeitungsschritte (Schrupp- bzw. Schlichtschnitte)

## Patentansprüche

1. Verfahren zum Verzahnen von Werkrädern (6) durch Wälzschälen mit einem Schneidzähne (3) aufweisenden Schälrad (1), mit einer um eine Werkstückdrehachse drehangetriebenen Werkstückspindel zur Aufnahme des Werkrades (6) und mit einer um eine Werkzeugdrehachse (2) drehangetriebenen, das Schälrad (1) tragenden Werkzeugspindel, wobei die Werkzeugspindel und die Werkstückspindel in einem Achskreuzwinkel (α) zueinander positioniert sind und die Antriebe von Werkzeugspindel und Werkstückspindel in einem vorgegebenen Drehzahlverhältnis drehangetrieben werden, wobei die Verzahnung in mehreren aufeinanderfolgenden Bearbeitungsschritten (S1 bis S20) erfolgt, wobei mit einem Vorschub mit einer Komponente in Achsrichtung (10) der Werkstückspindel die Zahnzwischenräume (7) zwischen den zu fertigenden Zähnen schrittweise vertieft werden, wobei zwischen den Bearbeitungsschritten der Achsabstand von Werkzeugspindel und Werkstückspindel und ein Verdrehwinkel (α1 bis α19) eines festen Punkts bspw. der Mitte des zwischen einer ersten und einer zweiten Zahnflanke (9, 9') gelegenen Zahnzwischenraums (7) zu einem festen Punkt auf dem Schneidzahn (3) bspw. dessen Mitte derart verändert wird, dass ein erster Schneidkantenabschnitt (5") des Schneidzahnes (3) gegenüber anderen Schneidkantenabschnitten (5', 5"') dieses Schneidzahnes (3) mit einem verminderten Spanabtrag an einem bei einem vorhergehenden Bearbeitungsschritt gefertigten Zahnflankenabschnitt der ersten Zahnflanke (9) angreift **dadurch gekennzeichnet, dass** sich der Absolutbetrag des Verdrehwinkels (α1 bis α19) schrittweise verkleinert, das Vorzeichen des Verdrehwinkels (α1 bis α2) jedoch nach einer Gruppe von Bearbeitungsschritten (S1 bis S20) oder nach jedem Bearbeitungsschritt ändert.

2. Verfahren nach Anspruch 1, **dadurch gekennzeichnet, dass** nach einer Gruppe von Bearbeitungsschritten, bevorzugt nach jedem Bearbeitungsschritt der Verdrehwinkel (α1 bis α19) derart geändert wird, dass ein zweiter Schneidkantenabschnitt (5'''), der vom ersten Schneidkantenabschnitt (5") verschieden ist, an einem Zahnflankenabschnitt der zweiten Zahnflanke (9') gegenüber anderen Schneidkantenabschnitten (5', 5") dieses Schneidzahnes (3) mit einem verminderten Spanabtrag angreift.

3. Verfahren nach einem der vorangehenden Ansprüche, **dadurch gekennzeichnet, dass** die Bearbeitung mit einem einzigen Schlichtschritt endet, bei dem der Verdrehwinkel Null ist.

4. Verfahren nach einem der Ansprüche 1 oder 2, **dadurch gekennzeichnet, dass** die Bearbeitung mit zwei aufeinanderfolgenden Schlichtschritten endet, die mit einem minimalen Verdrehwinkel durchgeführt werden.

5. Verfahren nach einem der Ansprüche 3 oder 4, **dadurch gekennzeichnet, dass** während des einen oder zumindest einem der beiden Schlichtschritte oder in beiden Schlichtschritten der Achsabstand und/oder die Phasenlage kontinuierlich variiert wird.

6. Verfahren nach einem der vorangehenden Ansprüche, **dadurch gekennzeichnet, dass** zumindest nach einem die Zahnzwischenräume (7) vertiefenden Bearbeitungsschritt (S1 bis S16) ein Bearbeitungsschritt (S17, S18) durchgeführt wird, bei dem lediglich zumindest eine Zahnflanke (9, 9') nicht jedoch der Zahngrund (8) bearbeitet wird, wobei dieser den Zahnzwischenraum nicht vertiefende Bearbeitungsschritt (S17, S18) insbesondere ein Schlichtschritt ist.

7. Verfahren nach einem der vorangehenden Ansprüche, **dadurch gekennzeichnet, dass** der Verdrehwinkel zwischen den aufeinanderfolgenden Bearbeitungsschritten (S1 bis S20) derart geändert wird, dass die Zahnflanke (9, 9') eine Evolventenfläche ist oder entlang einer anderweitig speziell definierten Kontur verläuft.

8. Verfahren nach einem der vorangehenden Ansprüche, **dadurch gekennzeichnet, dass** zumindest bei einem Bearbeitungsschritt (S1 bis S20), insbesondere bei einem Schlichtschritt die Spanabtragsrichtung entgegengesetzt zur Vorschubrichtung ist.

9. Vorrichtung zum Verzahnen von Werkrädern (6) durch Wälzschälen mit einem Schneidzähne (3) aufweisenden Schälrad (1), mit einer um eine Werkstückdrehachse (10) drehangetriebenen Werkstückspindel (13) zur Aufnahme des Werkrades (1) und mit einer um eine Werkzeugdrehachse (2) drehangetriebenen, das Schälrad (1) tragenden Werkzeugspindel (11), wobei die Werkzeugspindel (11) und die Werkstückspindel (13) in einem Achskreuzwinkel (a) zueinander positioniert sind und die Werkzeugspindel (11) und die Werkstückspindel (13) jeweils von Antrieben (12, 14) drehantreibbar sind, mit einer programmgesteuerten Steuereinrichtung (15) zur Steuerung der Antriebe (12, 14) für die Werkzeugspindel (11) und die Werkstückspindel (13) sowie für einen Vorschub mit einer Komponente in Achsrichtung der Werkstückspindel (13) und eine Zustellung in Richtung des Achsabstandes von Werkzeugspindel (11) und Werkstückspindel (13), wobei die Steuereinrichtung so programmiert ist, dass die Antriebe (12,14) von der Werkzeugspindel (11) und der Werkstückspindel (13) in einem vorgegebenen Drehzahlverhältnis angetrieben werden und die Verzahnung in mehreren aufeinanderfolgenden Bearbeitungsschritten (S1 bis S20) erfolgt, wobei mit einem Vorschub mit einer Komponente in Achsrichtung (10) der Werkstückspindel die Zahnzwischenräume (7) zwischen den zu fertigenden Zähnen schrittweise vertieft werden wobei zwischen den Bearbeitungsschritten der Achsabstand von Werkzeugspindel und Werkstückspindel und ein Verdrehwinkel (α1 bis α19) eines festen Punkts bspw. der Mitte des zwischen einer ersten und einer zweiten Zahnflanke (9, 9') gelegenen Zahnzwischenraums (7) zu einem festen Punkt auf dem Schneidzahn (3) bspw. dessen Mitte derart verändert wird, dass ein erster Schneidkantenabschnitt (5") des Schneidzahnes (3) gegenüber anderen Schneidkantenabschnitten (5', 5''') dieses Schneidzahnes (3) mit einem verminderten Spanabtrag an einem bei einem vorhergehenden Bearbeitungsschritt gefertigten Zahnflankenabschnitt der ersten Zahnflanke (9) angreift, wobei sich der Absolutbetrag des Verdrehwinkels (α1 bis α19) schrittweise verkleinert, das Vorzeichen des Verdrehwinkels (α1 bis α2) jedoch nach einer Gruppe (S1 bis S20) oder nach jedem Bearbeitungsschritt ändert.

10. Vorrichtung nach Anspruch 9, **dadurch gekennzeichnet, dass** die Steuereinrichtung so programmiert ist, dass nach einer Gruppe von Bearbeitungsschritten, bevorzugt nach jedem Bearbeitungsschritt der Verdrehwinkel (α1 bis α19) derart geändert wird, dass ein zweiter Schneidkantenabschnitt (5'''), der vom ersten Schneidkantenabschnitt (5") verschieden ist, an einem Zahnflankenabschnitt der zweiten Zahnflanke (9') gegenüber anderen Schneidkantenabschnitten (5', 5") dieses Schneidzahnes (3) mit einem verminderten Spanabtrag angreift.

11. Vorrichtung nach Anspruch 10, **dadurch gekennzeichnet, dass** die Steuereinrichtung (15) so programmiert ist, dass die Vorrichtung nach einem der in den Ansprüchen 1 bis 8 angegebenen Verfahrensschritten arbeitet.

## Claims

1. A method for producing gears in gearwheels (6) by means of skiving with a skiving wheel (1) that features cutting teeth (3), with a workpiece spindle that is rotationally driven about a rotational workpiece axis and serves for receiving the gearwheel (6), and with a tool spindle that is rotationally driven about a rotational tool axis (2) and carries the skiving wheel (1), wherein the tool spindle and the workpiece spindle are positioned at an axial cross-angle (α) relative to one another and the drives of the tool spindle and the workpiece spindle are rotationally driven in a predefined speed ratio, wherein the gearing is produced in several successive processing steps (S1 to S20), wherein the spacewidths (7) between the teeth to be produced are incrementally cut deeper with a feed motion having a component in the axial direction (10) of the workpiece spindle, and wherein the axial spacing between the tool spindle and the workpiece spindle and a turning angle (α1 to α19) between a fixed point such as, e.g., the center of the spacewidth (7) lying between a first and a second tooth flank (9, 9') and a fixed point on the cutting tooth (3) such as, e.g., its center is changed between the processing steps in such a way that a first cutting edge section (5") of the cutting tooth (3) engages on a tooth flank section of a first tooth flank (9) produced during a preceding processing step with an at least reduced material removal referred to other cutting edge sections (5', 5''') of this cutting tooth (3), **characterized in that** the absolute value of the turning angle (α1 to α19) is incrementally reduced whereas the preceding sign of the turning angle (α1 to α2) is changed after a group of processing steps (S1 to S20) or after each processing step.

2. The method according to claim 1, **characterized in that** the turning angle (α1 to α19) is changed after a group of processing steps, preferably after each processing step, in such a way that a second cutting edge section (5'''), which differs from the first cutting edge section (5"), engages on a tooth flank section of the second tooth flank (9') with a reduced material removal referred to other cutting edge sections (5', 5") of this cutting tooth (3).

3. The method according to one of the preceding claims, **characterized in that** the processing ends with a single finish-machining step, during which the turning angle is zero.

4. The method according to one of the claims 1 or 2, **characterized in that** the processing ends with two successive finish-machining steps that are carried out with a minimal turning angle.

5. The method according to one of the claims 3 or 4, **characterized in that** the axial spacing and/or the phase position is continuously varied during the one or at least one of the two finish-machining steps or in both finish-machining steps.

6. The method according to one of the preceding claims, **characterized in that** a processing step (S17, S18), in which only at least one tooth flank (9, 9') is processed, but not the base (8) of the tooth, is carried out at least after a processing step (S1 to S16), in which the spacewidth (7) is cut deeper, wherein this processing step (S17, S18), in which the spacewidth is not cut deeper, particularly is a finish-machining step.

7. The method according to one of the preceding claims, **characterized in that** the turning angle is changed between the successive processing steps (S1 to S20) in such a way that the tooth flank (9, 9') forms an involute surface or extends along another specially defined contour.

8. The method according to one of the preceding claims, **characterized in that** the material removal direction extends opposite to the feed direction in at least one processing step (S1 to S20), particularly in a finish-machining step.

9. A device for producing gears in gearwheels (6) by means of skiving with a skiving wheel (1) that features cutting teeth (3), with a workpiece spindle (13) that is rotationally driven about a rotational workpiece axis (10) and serves for receiving the gearwheel (1), and with a tool spindle (11) that is rotationally driven about a rotational tool axis (2) and carries the skiving wheel (1), wherein the tool spindle (11) and the workpiece spindle (13) are positioned at an axial cross-angle (α) relative to one another and the tool spindle (11) and the workpiece spindle (13) respectively can be rotationally driven by drives (12, 14), with a program-controlled control unit (15) for controlling the drives (12, 14) for the tool spindle (11) and the workpiece spindle (13), as well as for a feed motion with a component in the axial direction of the workpiece spindle (13) and an infeed in the direction of the axial spacing between the tool spindle (11) and the workpiece spindle (13), wherein the control unit is programmed in such a way that the drives (12, 14) of the tool spindle (11) and the workpiece spindle (13) are driven in a predefined speed ratio and the gearing is produced in several successive processing steps (S1 to S20), wherein the spacewidths (7) between the teeth to be produced are incrementally cut deeper with a feed motion having a component in the axial direction (10) of the workpiece spindle, and wherein the axial spacing between the tool spindle and the workpiece spindle and a turning angle (α1 to α19) between a fixed point such as, e.g., the center of the spacewidth (7) lying between a first and a second tooth flank (9, 9') and a fixed point on the cutting tooth (3) such as, e.g., its center is changed between the processing steps in such a way that a first cutting edge section (5") of the cutting tooth (3) engages on a tooth flank section of a first tooth flank (9) produced during a preceding processing step with an at least reduced material removal referred to other cutting edge sections (5', 5''') of this cutting tooth (3), wherein the absolute value of the turning angle (α1 to α19) is incrementally reduced whereas the preceding sign of the turning angle (α1 to α2) is changed after a group of processing steps (S1 to S20) or after each processing step.

10. The device according to claim 9, **characterized in that** the control unit is programmed in such a way that the turning angle (α1 to α19) is changed after a group of processing steps, preferably after each processing step, in such a way that a second cutting edge section (5'''), which differs from the first cutting edge section (5"), engages on a tooth flank section of the second tooth flank (9') with an at least reduced material removal referred to other cutting edge sections (5', 5") of this cutting tooth (3).

11. The device according to claim 10, **characterized in that** the control unit (15) is programmed in such a way that the device operates in accordance with one of the process steps specified in claims 1 to 8.

## Revendications

1. Procédé pour pourvoir des roues à usiner (6) avec des dents par taillage par développante avec une roue de taillage (1) présentant des dents de coupe (3), avec une broche porte-pièce pour recevoir la roue à usiner (6), qui est entraînée en rotation autour d'un axe de rotation de pièce à usiner et avec une broche porte-outil entraînée en rotation autour d'un axe de rotation d'outil (2) et portant la roue de taillage (1), dans lequel la broche porte-outil et la broche porte-pièce sont positionnées l'une par rapport à l'autre selon un angle de croisement d'axes (α) et les entraînements de la broche porte-outil et de la broche porte-pièce sont entraînés en rotation selon un rapport de vitesse prédéterminé, dans lequel le taillage de dents est effectué en une pluralité d'étapes d'usinage successives (S1 à S20), dans lequel les entredents (7) entre les dents à réaliser sont approfondis progressivement par une avance avec une composante dans la direction axiale (10) de la broche porte-pièce, dans lequel, entre les étapes d'usinage, l'espacement axial de la broche porte-outil et de la broche porte-pièce et un angle de décalage (α1 à α19) d'un point fixe, par exemple le milieu de l'entredent situé entre un premier et un deuxième flanc de dent (9, 9'), à un point fixe sur la dent de coupe (3), par exemple le milieu de celle-ci, est modifié de telle manière qu'une première partie d'arête de coupe (5") de la dent de coupe (3) attaque avec un enlèvement de copeaux réduit par rapport à d'autres parties d'arête de coupe (5', 5''') de cette dent de coupe (3), une partie de flanc de dent du premier flanc de dent (9) usinée dans une étape d'usinage précédente, **caractérisé en ce que** la valeur absolue de l'angle de décalage (α1 à α19) diminue progressivement, mais le signe de l'angle de décalage (α1 à α2) change après un groupe d'étapes d'usinage (S1 à S20) ou après chaque étape d'usinage.

2. Procédé selon la revendication 1, **caractérisé en ce que**, après un groupe d'étapes d'usinage, de préférence après chaque étape d'usinage, l'angle de décalage (α1 à α19) est modifié de telle manière qu'une deuxième partie d'arête de coupe (5'''), qui est différente de la première partie d'arête de coupe (5"), attaque une partie de flanc de dent du deuxième flanc de dent (9') avec un enlèvement de copeaux réduit par rapport aux autres parties d'arête de coupe (5', 5") de cette dent de coupe (3).

3. Procédé selon l'une des revendications précédentes, **caractérisé en ce que** l'usinage se termine par une seule étape de finition dans laquelle l'angle de décalage est nul.

4. Procédé selon l'une des revendications 1 ou 2, **caractérisé en ce que** l'usinage se termine par deux étapes de finition successives réalisées avec un angle de décalage minimal.

5. Procédé selon l'une des revendications 3 ou 4, **caractérisé en ce que** pendant la ou au moins l'une des deux étapes de finition ou dans les deux étapes de finition, on fait varier en continu l'espacement axial et/ou la position de phase.

6. Procédé selon l'une des revendications précédentes, **caractérisé en ce que**, au moins après une étape d'usinage (S1 à S16) approfondissant les entredents (7), on réalise une étape d'usinage (S17, S18) dans laquelle est seulement usiné au moins un flanc de dent (9, 9'), mais pas la base de la dent (8), dans lequel cette étape d'usinage (S17, S18) n'approfondissant pas l'entredent est en particulier une étape de finition.

7. Procédé selon l'une des revendications précédentes, **caractérisé en ce que** l'angle de décalage est modifié entre les étapes d'usinage successives (S1 à S20) de telle manière que le flanc de dent (9, 9') soit une surface en développante ou s'étende le long d'un contour autrement défini spécialement.

8. Procédé selon l'une des revendications précédentes, **caractérisé en ce qu'**au moins dans une étape d'usinage (S1 à S20), en particulier dans une étape de finition, la direction d'évacuation des copeaux est opposée à la direction d'avance.

9. Dispositif pour pourvoir des roues à usiner (6) avec des dents par taillage par développante avec une roue de taillage (1) présentant des dents de coupe (3), avec une broche porte-pièce (13) pour recevoir la roue à usiner (1), qui est entraînée en rotation autour d'un axe de rotation de pièce à usiner (10) et avec une broche porte-outil (11) entraînée en rotation autour d'un axe de rotation d'outil (2) et portant la roue de taillage (1), dans lequel la broche porte-outil (11) et la broche porte-pièce (13) sont positionnées l'une par rapport à l'autre selon un angle de croisement d'axes (α) et la broche porte-outil (11) et la broche porte-pièce (13) peuvent être entraînées en rotation chacune par des entraînements (12, 14), avec un dispositif de commande (15) commandé par programme pour la commande des entraînements (12, 14) pour la broche porte-outil (11) et la broche porte-pièce (13), ainsi que pour une avance avec une composante dans la direction axiale de la broche porte-pièce (13) et une amenée dans la direction de l'espacement axial de la broche porte-outil (11) et de la broche porte-pièce (13), dans lequel le dispositif de commande est programmé de manière que les entraînements (12, 14) de la broche porte-outil (11) et de la broche porte-pièce (13) soient entraînés dans un rapport de vitesse de rotation prédéterminé et que le taillage de dents soit effectué en plusieurs étapes d'usinage successives (S1 à S20), dans lequel les entredents (7) entre les dents à réaliser sont progressivement approfondis avec une avance ayant une composante dans la direction axiale (10) de la broche porte-pièce, dans lequel, entre les étapes d'usinage, l'espacement axial de la broche porte-outil et de la broche porte-pièce et un angle de décalage (α1 à α19) d'un point fixe, par exemple le milieu de l'entredent situé entre un premier et un deuxième flanc de dent (9, 9') à un point fixe sur la dent de coupe (3), par exemple le milieu de celle-ci, est modifié de telle manière qu'une première partie d'arête de coupe (5") de la dent de coupe (3) attaque avec un enlèvement de copeaux réduit par rapport à d'autres parties d'arête de coupe (5', 5''') de cette dent de coupe (3), une partie de flanc de dent du premier flanc de dent (9) usinée dans une étape d'usinage précédente, dans lequel la valeur absolue de l'angle de décalage (α1 à α19) diminue progressivement, mais le signe de l'angle de décalage (α1 à α2) change après un groupe d'étapes d'usinage (S1 à S20) ou après chaque étape d'usinage.

10. Dispositif selon la revendication 9, **caractérisé en ce que** le dispositif de commande est programmé de manière que, après un groupe d'étapes d'usinage, de préférence après chaque étape d'usinage, l'angle de décalage (α1 à α19) soit modifié de manière qu'une deuxième partie d'arête de coupe (5'''), qui est différente de la première partie d'arête de coupe (5"), attaque une partie de flanc de dent du deuxième flanc de dent (9) avec un enlèvement de copeaux réduit par rapport aux autres parties d'arête de coupe (5', 5") de cette dent de coupe (3).

11. Dispositif selon la revendication 10, **caractérisé en ce que** le dispositif de commande (15) est programmé de telle manière que le dispositif fonctionne selon l'une des étapes du procédé indiquées dans les revendications 1 à 8.
